# EUROPÄISCHE PATENTSCHRIFT

(11) **EP 3 135 599 B1**
(45) Veröffentlichungstag und Bekanntmachung des Hinweises auf die Patenterteilung: **03.10.2018**
(21) Anmeldenummer: 15182116.2
(22) Anmeldetag: 24.08.2015
(51) Int. Cl.: B65D 47/26, B65D 47/28, B65D 50/04

(54) **AUSTRAGKOPF FÜR EINEN FLÜSSIGKEITSSPENDER UND FLÜSSIGKEITSSPENDER**
APPLICATOR HEAD FOR A LIQUID DISPENSER AND LIQUID DISPENSER
TETE DISTRIBUTRICE POUR UN DISTRIBUTEUR DE LIQUIDE ET DISTRIBUTEUR DE LIQUIDE

(43) Veröffentlichungstag der Anmeldung: 01.03.2017
(73) Patentinhaber: Aptar Radolfzell GmbH, 78315 Radolfzell (DE)
(72) Erfinder: Greiner-Perth, Jürgen, 78244 Gottmadingen (DE); Meinel, Pia, 78467 Konstanz (DE); Nadler, Günter, 78345 Moos-Iznang (DE)
(74) Vertreter: Patentanwaltskanzlei Cartagena

(56) Entgegenhaltungen:
- WO-A1-98/04471
- DE-A1-102013 107 439
- US-A- 4 544 063
- US-A1- 2011 163 132

## Beschreibung

### ANWENDUNGSGEBIET UND STAND DER TECHNIK

Die Erfindung betrifft einen Austragkopf für einen Flüssigkeitsspender nach dem Oberbegriff von Anspruch 1. Die Erfindung betrifft weiterhin einen Flüssigkeitsspender nach dem Oberbegriff von Anspruch 11.

Aus dem Stand der Technik ist es bereits bekannt, Flüssigkeitsspender derart zu schützen, dass Kinder nicht ohne weiteres den Inhalt austragen können. Hierzu ist es beispielsweise bekannt, Flüssigkeitsspender mit Kappen zu versehen, die erst durch besondere Kraftbeaufschlagung oder Bewegungssequenzen abnehmbar sind. Auch ist es bekannt, Betätigungshandhaben, mittels derer eine Pumpe eines Flüssigkeitsspenders betätigt werden kann, zu arretieren, um erst nach einer gezielten Freigabe der Arretierung einen Austrag zu gestatten. Verschiedene kindergesicherte Flüssigkeitsspender sind beispielsweise aus der DE 10 2013 202 933 B3 bekannt.

Eine solche Kindersicherung ist insbesondere bei Flüssigkeitsspendern für medizinische/pharmazeutische Zwecke gewünscht. Bei diesen ist es von besonderer Wichtigkeit, dass Kinder nicht an den Inhalt gelangen.

Ein Austragkopf gemäß dem Oberbegriff des Anspruchs 1 ist aus der US2011/1632132 A1 bekannt.

### AUFGABE UND LÖSUNG

Aufgabe der Erfindung ist es, eine baulich vergleichsweise einfache Kindersicherung zur Verfügung zu stellen, insbesondere für solche Flüssigkeitsspender, die in einer Überkopflage und/oder durch Kraftbeaufschlagung einer Quetschflasche Flüssigkeit austragen. Aufgabe der Erfindung ist es weiterhin, einen korrespondierenden Austragkopf für einen Flüssigkeitsspender zur Verfügung zu stellen.

Diese Aufgabe wird durch die Merkmale des Anspruchs 1 gelöst. Der erfindungsgemäße der Austragkopf ist zur Anbringung an einem Flüssigkeitsbehälter vorgesehen, so dass Austragkopf und Flüssigkeitsbehälter gemeinsam einen Flüssigkeitsspender bilden. Der Austragkopf verfügt über eine Austragöffnung und über ein Schaltventil, welches im geschlossenen Zustand einen Flüssigkeitspfad vom Flüssigkeitsbehälter zur Austragöffnung schließt und im geöffnet Zustand dieses Flüssigkeitspfad öffnet. Der Austragkopf verfügt über ein ortsfest mit dem Flüssigsbehälter verbundenes Innenbauteil und über ein beweglich am Innenbauteil vorgesehenes Außenbauteil, welches untrennbar mit dem Innenbauteil verbunden ist, wobei das Außenbauteil gegenüber dem Innenbauteil zwischen einer ersten Relativstellung und einer zweiten Relativstellung bewegbar ist. Das Schaltventil kann durch eine Relativbewegung des Innenbauteils gegenüber dem Außenbauteil geöffnet und geschlossen werden, wobei es in der ersten Relativstellung geschlossen ist und in der zweiten Relativstellung geöffnet ist.

Das Innenbauteil und das Außenbauteil sind in der ersten Relativstellung durch einen formschlüssig wirkenden Kindersicherungsmechanismus sicherbar, der wiederholt zwischen einer Sicherungsstellung und einer Freigabestellung umschaltbar ist, wobei in der Sicherungsstellung eine Relativverlagerung des Außenbauteils aus der ersten Relativstellung in die zweite Relativstellung unterbunden ist.

Ein erfindungsgemäßer Austragkopf verfügt mindestens über zwei Bauteile, nämlich das genannte Innenbauteil und das genannte Außenbauteil. Es kann sich um einstückige Bauteile oder um Bauteile aus mehreren zueinander unbeweglich gefügten Teilbauteilen handeln. Die Bauteile sind vorzugsweise Kunststoffbauteile. Das Innenbauteil und das Außenbauteil sind untrennbar miteinander verbunden, worunter zu verstehen ist, dass bei bestimmungsgemäßer Verwendung diese beiden Bauteile stets zusammengefügt bleiben, d.h. insbesondere keines der beiden Bauteile in Art einer Kappe oder dergleichen vollständig abgenommen wird.

Dennoch sind bei einer erfindungsgemäßen Gestaltung das Innenbauteil und das Außenbauteil gegeneinander beweglich. Durch die Relativbewegung des Außenbauteils gegenüber dem Innenbauteil kann das am Austragkopf vorgesehene Schaltventil geöffnet und geschlossen werden. Befinden sich das Innenbauteil und das Außenbauteil in ihrer ersten Relativstellung (Schließstellung), so ist ein Flüssigkeitspfad zwischen einer Einlassseite des Austragkopfes und der Austragöffnung geschlossen. Sind sie in der zweiten Relativstellung (Öffnungsstellung), so ist dieser Flüssigkeitspfad offen und Flüssigkeit kann ausgetragen werden, gegebenenfalls bei geringer Druckbeaufschlagung zur Überwindung eines nachfolgend noch erläuterten zusätzlichen Auslassventils.

Der Austragkopf ist mit dem genannten Kindersicherungsmechanismus versehen. Dieser Kindersicherungsmechanismus wirkt dahingehend, dass die Überführung des Innenbauteils und des Außenbauteils von der ersten Relativstellung (Schließstellung) in die zweite Relativstellung (Öffnungsstellung) unterbunden wird, sofern sich der Kindersicherungsmechanismus in seiner Sicherungsstellung befindet. Erst durch die bestimmungsgemäß durch einen Erwachsenen durchzuführende Überführung des Kindersicherungsmechanismus in die Freigabestellung wird der Ausgangszustand erzielt, um eine Relativverlagerung des Außenbauteils gegenüber dem Innenbauteil in die zweite Relativstellung bewerkstelligen zu können.

Für die Relativbeweglichkeit des Außenbauteils gegenüber dem Innenbauteil sind verschiedene Varianten denkbar. Das Außenbauteil kann gegenüber dem Innenbauteil zwischen der ersten Relativstellung und der zweiten Relativstellung um eine Drehachse drehbar sein und/oder zwischen der ersten Relativstellung und der zweiten Relativstellung translativ verlagerbar sein.

Das Außenbauteil kann somit rein drehbeweglich am Innenbauteil gelagert sein, ohne dass in Axialrichtung eine Verlagerbarkeit gegeben ist. Es kann auch eine rein lineare translative Beweglichkeit gegeben sein, mittels derer Innenbauteil und Außenbauteil gegeneinander verschoben werden. Weiterhin sind auch Kombinationen denkbar, wie beispielsweise eine überlagerte Relativbeweglichkeit, wie sie bei einem Gewinde der Fall ist, oder eine mehrphasige Relativbeweglichkeit, wie sie bei einem Bajonett üblich ist.

In Abhängigkeit des Typs der Relativbeweglichkeit sind verschiedene Gestaltungen des Schaltventils besonders zweckmäßig. Dies wird im Weiteren noch erläutert.

Der Austragkopf verfügt über ein druckabhängig bei gegenüber dem Umgebungsdruck höheren Innendruck öffnendes Auslassventil stromaufwärts oder stromabwärts des Schaltventils, oder der Austragkopf verfügt über ein Entnahmeventil jenseits des Sachaltventils.

Dieses zusätzliche Auslassventil führt dazu, dass alleine durch Öffnen des Schaltventils noch kein freies Austreten der Flüssigkeit möglich ist. Es bedarf zusätzlich einer Druckbeaufschlagung, wie sie beispielsweise durch das Zusammendrücken einer Quetschflasche möglich ist. Neben der besseren Dosierbarkeit des Austragvorgangs führt dies zu einer erhöhten Sicherheit gegen den ungewollten Austrag durch ein Kind. Insbesondere wenn der Flüssigkeitsspender in einer Überkopflage Verwendung finden soll, ist ein solches zusätzliches Ventil von Vorteil.

Das Auslassventil kann durch ein elastisch auslenkbares Ventilbauteil gebildet sein, an dem die Austragöffnung vorgesehen ist, welche bei anliegendem Flüssigkeitsdruck durch Verformung des Ventilbauteils geöffnet wird. Das Ventilbauteil kann außenseitig über einen umlaufenden Befestigungsabschnitt verfügen, der am Innenbauteil oder am Außenbauteil befestigt ist oder der zwischen dem Innenbauteil und dem Außenbauteil festgelegt ist.

Diese Anordnung des Ventilbauteils führt zu großer baulicher Einfachheit. Das Ventilbauteil ist in diesem Falle ein einstückiges Bauteil aus einem elastisch verformbaren Material, wie beispielsweise einem Elastomer. Es weist selbst die Austragöffnung auf, beispielsweise in Form eines einfachen Schlitzes oder eines Kreuzschlitzes. Durch die druckbedingte Verformung des Bauteils wird diese Austragöffnung geöffnet und der Austrag kann erfolgen. Insbesondere durch die Festlegung des Ventilbauteils zwischen Innenbauteil und Außenbauteil sind eine einfache Montage und eine kostengünstige Gestaltung möglich. Sofern das Innenbauteil und das Außenbauteil bestimmungsgemäß translativ gegeneinander bewegt werden, ist die Festlegung des Ventilbauteils am Außenbauteil vorteilhaft. So kann das Außenbauteil beispielsweise aus zwei Einzelteilen bestehen, die miteinander verpresst oder verrastet werden und zwischen denen der umlaufende Befestigungsabschnitt des Ventilbauteils eingeklemmt werden kann.

Der Kindersicherungsmechanismus kann über Anschlagflächen am Innenbauteil und am Außenbauteil verfügen, die ausgehend von der ersten Relativstellung eine rotative und/oder eine translative Bewegung unterbinden und die durch radiale Verlagerung einer der Anschlagflächen voneinander entkoppelbar sind.

Die Verhinderung einer Relativbewegung des Innenbauteils und des Außenbauteils erfolgt demnach mittels der aneinander anliegenden Anschlagflächen, die bei Überführung des Kindersicherungsmechanismus in die Freigabestellung außer Eingriff miteinander gebracht werden. Hierfür wird mindestens eine Anschlagfläche vorzugsweise radial verlagert.

Das Außenbauteil kann in der ersten Relativstellung gegenüber dem Innenbauteil durch manuelle Kraftbeaufschlagung derart verformbar sein, dass die Anschlagfläche am Außenbauteil aus dem Eingriff mit der Anschlagfläche am Innenbauteil gelangt.

Die Verlagerung der Anschlagfläche durch Verformung des Außenbauteils gestattet es, durch Auslegung der Wandstärken des Außenbauteils einfach festzulegen, welche Körperkraft erforderlich ist. Zudem ist es für ein Kind schwer zu durchschauen, dass jenes Außenbauteil, welches zum Zwecke der Relativverlagerung gegenüber dem Innenbauteil bewegt wird, zusätzlich unmittelbar vor dieser Relativbewegung durch Kraftbeaufschlagung verformt wurde, um die Kindersicherung zu überwinden. Da das Außenbauteil vorzugsweise aus einem Kunststoff gestaltet ist, der nach Wegfall der Kraftbeaufschlagung seine Ausgangsform wieder annimmt, besteht keine Gefahr, dass der Kindersicherungsmechanismus nach dem Austrag von Flüssigkeit versehentlich im freigegebenen Zustand verbleibt. Die manuelle Rücküberführung des Außenbauteils und des Innenbauteils in ihre erste Relativstellung (Schließstellung) kann bei einer solchen Gestaltung automatisch den Kindersicherungsmechanismus wieder in seine Sicherungsstellung verbringen.

Das Außenbauteil und das Innenbauteil können drehbar und axial unbeweglich aneinander angebracht sein. Das Schaltventil kann in einem solchen Falle über einen radial ausgerichteten Flüssigkeitsdurchlass am Innenbauteil und einen radial ausgerichteten Flüssigkeitsdurchlass am Außenbauteil verfügen, wobei in der ersten Relativstellung die Flüssigkeitsdurchlässe gegeneinander in Umfangsrichtung versetzt sind, so dass das Schaltventil geschlossen ist, und wobei in der zweiten Relativstellung die Flüssigkeitsdurchlässe derart miteinander fluchten, dass das Schaltventil geöffnet ist.

Zu diesem Zweck haben das Innenbauteil und das Außenbauteil vorzugsweise schalenartig ineinandergefügte Wandungen, die durch die jeweiligen Flüssigkeitsdurchlässe durchbrochen werden. Diese Wandungen können beispielsweise zylindrisch oder konisch ausgebildet sein. In der ersten Relativstellung des Innenbauteils und des Außenbauteils fluchten die Flüssigkeitsdurchlässe nicht, so dass das Schaltventil geschlossen ist und ein Austragen von Flüssigkeit nicht möglich ist.

Das Außenbauteil und das Innenbauteil können translativ beweglich bezogen auf eine Relativbewegungsrichtung aneinander angebracht sein. Das Schaltventil kann dann über einen Flüssigkeitsdurchlass am Innenbauteil verfügen, der durch eine Verschlussfläche am Außenbauteil im Zuge der translativen Relativbewegung des Innenbauteils gegenüber dem Außenbauteil geöffnet oder geschlossen werden kann, oder das Schaltventil kann über einen Flüssigkeitsdurchlass am Außenbauteil verfügen, der durch eine Verschlussfläche am Innenbauteilbauteil im Zuge der translativen Relativbewegung des Innenbauteils gegenüber dem Außenbauteil geöffnet oder geschlossen werden kann.

Bei einer solchen Gestaltung mit translativer und vorzugsweise linearer Relativbeweglichkeit ist eine mögliche Gestaltung des Schaltventils somit so geartet, dass ein beispielsweise tellerartiger Abschnitt des Schaltventils, der die Verschlussfläche bildet, gegen einen umlaufenden Randbereich des Flüssigkeitsdurchlasses gedrückt werden kann, um diesen zu verschließen. Dies stellt eine baulich sehr einfache Möglichkeit zur Herstellung eines solchen Schaltventils dar.

Der Austragkopf kann über ein Entnahmeventil jenseits des Schaltventils verfügen. Der Austragkopf verfügt hierzu über eine separate Kolbenspritze oder eine andere Entnahmeeinrichtung, die derart an das Außenbauteil und das Entnahmeventil angepasst ist, dass sie durch Ansetzen an das Außenbauteil das Entnahmeventil öffnet.

Ein Austragkopf mit einem solchen Entnahmeventil gestattet es, eine Flüssigkeitscharge in die genannte separate Kolbenspritze oder eine andere Entnahmeeinrichtung zu füllen, um sie aus dieser heraus an ein Kind zu verabreichen. Hierdurch wird die Schwierigkeit zur selbstständigen Entnahme für ein Kind nochmals erhöht. Dies gilt insbesondere, wenn das Entnahmeventil so ausgestaltet ist, dass es nur mechanisch durch Einführen der Kolbenspritze geöffnet werden kann, nicht aber durch Überdruck.

Der Austragkopf kann über eine Blende zwischen einer Einlassseite des Austragkopfes und dem Schaltventil verfügen.

Die genannte Blende ist insbesondere nutzbar, um zu verhindern, dass bei geöffnetem Schaltventil ein einfacher Austrag der Flüssigkeit möglich ist. Die Blende kann insbesondere dynamische Druckerhöhungen durch eine Schüttelbewegung dämpfen und so verhindern, dass ein druckabhängig öffnendes Auslassventil sich infolge einer durch ein Kind bewirkten Schüttelbewegung ausreichend weit öffnet, um Flüssigkeit abzugeben. Die Blende kann insbesondere durch einen tellerförmigen oder napfförmigen Einsatz gebildet werden, der an der Einströmseite des Austragkopfes vorgesehen ist. Durch schmale Kanäle im Randbereich kann die Flüssigkeit dennoch bei der Benutzung des Flüssigkeitsspenders durch einen Erwachsenen in ausreichender Menge ausgetragen werden.

Das Innenbauteil und das Außenbauteil können Kennzeichnungsmittel aufweisen, die anzeigen, ob sich das Innenbauteil und das Außenbauteil in der ersten Relativstellung befinden, wobei insbesondere am Außenbauteil eine Aussparung vorgesehen ist, durch die hindurch in der ersten Relativstellung eine Sperrmarkierung am Innenbauteil erkennbar ist.

Alternativ oder zusätzlich kann vorgesehen sein, dass das Außenbauteil und sich in Richtung des Flüssigkeitsspeichers anschließende Gehäuseabschnitte eine von der Kreisform abweichende Querschnittsform aufweisen, beispielsweise eine leicht ovale Querschnittsform. In der ersten Relativlage sind diese Querschnittsformen dann fluchtend zueinander ausgerichtet und in der zweiten Relativlage gegeneinander verdreht, so dass das Außenbauteil partiell übersteht. So ist einfach erkennbar, ob der Austragkopf versehentlich in der zweiten Relativstellung (Öffnungsstellung) belassen wurde.

Zur Kraftbeaufschlagung des Außenbauteils zum Zwecke des Lösens des Kindersicherungsmechanismus können am Außenbauteil in Umfangsrichtung zur Anschlagfläche versetzt Betätigungsflächen vorgesehen sein. Diese sind vorzugsweise durch eine Riffelung oder dergleichen kenntlich gemacht. Vorzugsweise sind die Betätigungsflächen um 90° gegenüber der auszulenkenden Anschlagfläche versetzt.

Der Austragkopf kann über eine Kappe oder einen Messbecher verfügen, der in einer Stauposition auf das Außenbauteil aufsetzbar ist und dort kraftschlüssig oder formschlüssig gehalten wird.

Diese Kappe oder dieser Messbecher kann eine Einbuchtung aufweisen, die durch eine Aussparung des Außengehäuses hindurch ragt und dort eine umlaufende Abdichtung verursacht. Diese Abdichtung kann beispielsweise an einer umlaufenden Kante des Außenbauteils oder auch an einem Abschnitt des Auslassventils erfolgen. Die zusätzliche Abdichtung dieser beschriebenen Art ist insbesondere bei der Verwendung von Auslassventilkörpern zweckmäßig, die einstückig und mit einem Ventilschlitz ausgebildet sind, da diese aufgrund nur geringer Vorspannung mitunter nicht perfekt abdichten. Durch die zusätzliche Dichtstelle einen ein Austrocknen und Kristallisation verhindert oder vermindert.

Das Innenbauteil und das Außenbauteil können einstückig vorgesehen sein und der Austragkopf lediglich aus diesen beiden Bauteilen bestehen. Im Falle einer Gestaltung mit Auslassventil aus elastischem Material kann der Austragkopf somit insgesamt aus nur drei Teilen bestehen. Zusammen mit dem Flüssigkeitsbehälter ergibt sich dann ein Flüssigkeitsspender aus nur vier Teilen oder im Falle einer einstückigen Gestaltung von Flüssigkeitsbehälter und Innenbauteil aus sogar nur drei Teilen.

Der erfindungsgemäße Flüssigkeitsspender weist einen Flüssigkeitsbehälter sowie einen Austragkopf auf.

Der Austragkopf ist nach einem der vorstehenden Ansprüche ausgebildet.

Der Flüssigkeitsbehälter kann insbesondere als Quetschflasche ausgebildet sein, also zur bestimmungsgemäßen Kraftbeaufschlagung zum Zwecke der Reduzierung des Innenvolumens. Wie bereits erwähnt, kann eine solche Quetschflasche durch Anpassung von Wandungsstärken so ausgelegt werden, dass es einem Kind schwer fällt, sie ausreichend zusammenzudrücken.

Der Flüssigkeitsbehälter kann einstückig mit dem Innenbauteil verbunden sein.

Stattdessen können der Flüssigkeitsbehälter und das Innenbauteil Kopplungsmittel aufweisen, mittels derer das Innenbauteil auf dem Flüssigkeitsbehälter befestigbar ist. Hier kommen übliche bekannte Kopplungsmittel in Frage, wie insbesondere Gewindeverbindungen und Schnappverbindungen.

Der Flüssigkeitsbehälter kann mit einer pharmazeutischen Flüssigkeit befüllt sein, insbesondere mit einem Hustensaft.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 und 2 zeigen eine erste Ausführungsform eines erfindungsgemäßen Flüssigkeitsspenders in einer Gesamtdarstellung im geschlossenen und kindergesicherten Zustand.
Fig. 3 und 4 zeigen zwei Querschnitte durch diese erste Ausführungsform im geschlossenen Zustand und kindergesicherten Zustand.
Fig. 5 und 6 zeigen die erste Ausführungsform in Gesamtdarstellung im geöffneten Zustand.
Fig. 7 und 8 zeigen entsprechende Querschnitte entsprechend den Fig. 3 und 4 im geöffneten Zustand des Spenders.
Fig. 9 zeigt eine zweite Ausführungsform, die nicht Teil der Erfindung ist, eines Spenders in einer geschnittenen Gesamtdarstellung.
Fig. 10 zeigt eine dritte Ausführungsform eines erfindungsgemäßen Spenders in einer geschnittenen Gesamtdarstellung.
Fig. 11 und 12 zeigen eine vierte Ausführungsform eines erfindungsgemäßen Spenders in einer geschnittenen Gesamtdarstellung und in einer ungeschnittenen Darstellung.
Fig. 13 zeigt die vierte Ausführungsform in einer Ansicht von oben.
Fig. 14 zeigt den Austragkopf einer fünften Ausführungsform eines erfindungsgemäßen Flüssigkeitsspenders in einer geschnittenen Seitenansicht im geschlossenen Zustand.
Fig. 15 zeigt zum Zustand der Fig. 14 einen Querschnitt zur Verdeutlichung des Kindersicherungsmechanismus.
Fig. 16 und 17 zeigen die fünfte Ausführungsform in einer geschnittenen Seitenansicht und in einem Querschnitt im geöffneten Zustand.
Fig. 18 zeigt den Austragkopf einer sechsten Ausführungsform eines erfindungsgemäßen Flüssigkeitsspenders.

### DETAILLIERTE BESCHREIBUNG DER AUSFÜHRUNGSBEISPIELE

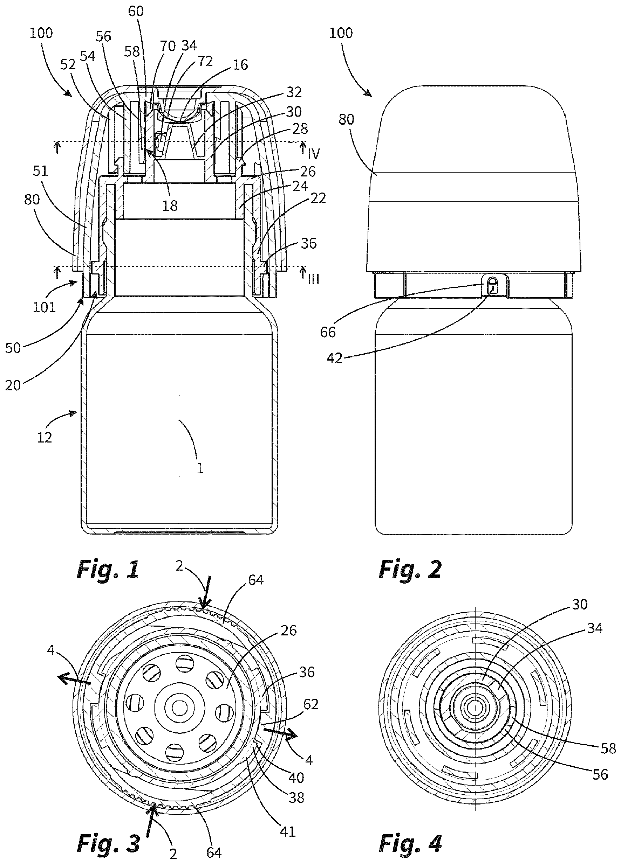

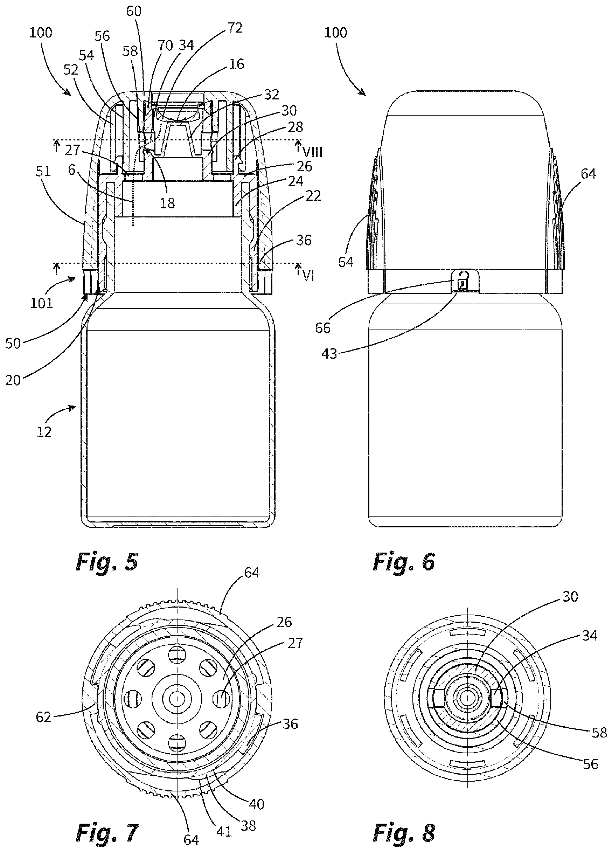

Die Fig. 1 bis 8 zeigen ein erstes Ausführungsbeispiel eines erfindungsgemäßen Spenders 100 mit einem erfindungsgemäßen Austragkopf 101. Es zeigen die Fig. 1 bis 4 den Zustand des Spenders im gesicherten Zustand und die Fig. 5 bis 8 den austragsbereiten Zustand des Spenders.

Bezug nehmend auf die Fig. 1 bis 4 ist der Flüssigkeitsspender 100 zu erkennen, der über einen flaschenförmigen Flüssigkeitsspeicher 12 verfügt, welcher als Quetschflasche ausgebildet ist und somit bestimmungsgemäß zum Austrag von Flüssigkeit zusammengedrückt wird. Im Zustand der Fig. 1 bis 4 ist auf den Austragkopf 101 des Flüssigkeitsspenders 100 eine Kappe 80 aufgesetzt, die im Bereich einer Austragöffnung 16 eine im Weiteren noch erläuterte Einbuchtung 82 aufweist. Diese Kappe kann auch als Messbecher verwendet werden, in den bestimmungsgemäß die Flüssigkeit abgegeben wird und der vorzugsweise eine Messskala aufweist. Die Kappe kann weiterhin durch eine luftdichte Dichtstelle zum Außenbauteil wirksam die Kristallisation von Flüssigkeitsresten jenseits der Auslassöffnung verhindern und einen Auslaufschutz zur Verfügung stellen.

Der im Zustand der Fig. 1 bis 4 durch diese Kappe 80 überdeckte Austragkopf 101 weist zwei zueinander relativbewegliche Bauteile auf, die vorliegend einstückig ausgebildet sind, jedoch auch aus mehreren Teilbauteilen bestehen könnten. Ein Innenbauteil 20 ist mittels einer Schnappverbindung auf dem Flüssigkeitsspeicher 12 aufgerastet. Hierfür verfügt das Innenbauteil 20 über zwei hülsenförmige Abschnitte 22, 24, die über eine Stirnfläche 26 miteinander verbunden sind und die eine flüssigkeitsdichte Verbindung am Flaschenhals schaffen. Auf dieses Innenbauteil 20 ist ein Außenbauteil 50 aufgesetzt, welches unverlierbar mit dem Innenbauteil 20 gekoppelt ist. Das Außenbauteil 50 verfügt über einen Mantel 51, der das Innenbauteil hülsenförmig umgibt. Der Mantel 51 geht in eine obere Deckfläche 60 über, die mittig mit einer Aussparung versehen ist. An der Innenseite des Außenbauteils 50 sind Fortsätze 52, 54 vorgesehen, die gemeinsam mit Halteabschnitten 28 des Innenbauteils 20 verhindern, dass das Außenbauteil 50 vom Innenbauteil 20 abgezogen wird und somit die Unverlierbarkeit herstellen.

Ausgehend von der Stirnfläche 26 weist das Innenbauteil eine sich zylindrisch nach oben erstreckende Ringwandung 30 auf, deren Innenbereich durch eine mit einer Erhebung versehene Trennwandung 32 vom Flüssigkeitsspeicher 12 getrennt ist. In der zylindrischen Wandung 30 sind Durchbrechungen 34 vorgesehen. Außenseitig liegt an dieser zylindrischen Wandung 30 des Innenbauteils 20 eine sich von der Deckfläche 60 nach unten erstreckende zylindrische Wandung 56 des Außenbauteils an, die ebenfalls Durchbrechungen 58 aufweist. Die beiden Wandungen 30, 56 mit ihren jeweiligen Durchbrechungen 33, 58 bilden ein durch Relativbewegung des Innenbauteils 20 und des Außenbauteils 50 schaltbares Schaltventil 18.

Im geschlossenen Zustand der Fig. 1 sind diese Durchbrechungen 34, 58 nicht fluchtend zueinander angeordnet, wie sich insbesondere der Fig. 4 entnehmen lässt. Flüssigkeit aus dem Flüssigkeitsspeicher 12 kann daher nicht in den Bereich oberhalb der Trennwandung 32 gelangen. Das Schaltventil 18 ist geschlossen.

Der Zustand des Flüssigkeitsspenders 100 in den Fig. 1 bis 4 ist der geschlossene und gesicherte Zustand, in dem Flüssigkeit aufgrund der Anordnung der Durchbrechungen 34, 58 nicht ausgetragen werden kann. Wie anhand der ungeschnittenen Fig. 2 ersichtlich ist, wird am Spender dieser Zustand dadurch verdeutlicht, dass ein entsprechendes Piktogramm 42 durch eine Aussparung 66 des Außenbauteils erkennbar ist.

Das Innenbauteil 20 und das Außenbauteil 50 steuern durch ihre Relativanordnung über das Schaltventil 18 die Möglichkeit des Zustroms von Flüssigkeit in den Bereich oberhalb der Trennwandung 32. Sie sind zu diesem Zwecke grundsätzlich gegeneinander um eine Drehachse 1 verdrehbar. Allerdings ist ein Kindersicherungsmechanismus vorgesehen, der diese Drehbewegung erschwert, so dass sie für ein Kind kaum möglich ist. Bezug nehmend auf Fig. 3, die die in Fig. 1 mit III gekennzeichnete Schnittebene zeigt, wird dieser Kindersicherungsmechanismus durch die Nocken 62 gebildet, die in in Umfangsrichtung beidseitig begrenzten Aussparungen des Innenbauteils 20 angeordnet sind. Eine Drehbewegung des Außenbauteils 50 gegenüber dem Innenbauteil 20 ist in dem in Fig. 3 dargestellten Zustand zunächst nicht möglich. Die bestimmungsgemäße Drehbewegung des Außenbauteils 50 im Uhrzeigersinn wird durch eine Anschlagsfläche 40 einer zum Innenbauteil 20 gehörigen Nocke 38 verhindert. In entgegengesetzter Richtung verhindert eine Nocke 36 die Drehbewegung.

Um den Spender nutzbar zu machen, ist zunächst die Kappe 80 abzunehmen, die bis zu diesem Zeitpunkt gemeinsam mit der Erhebung der Trennwand 32 die Auslassöffnung 16 sicher verschlossen gehalten hat. Anschließend muss eine Drehbewegung des Außenbauteils 50 gegenüber dem Innenbauteil 20 erfolgen. Dies ist jedoch erst dann möglich, wenn Bezug nehmend auf Fig. 3 zwei Betätigungsflächen 64 am Außenbauteil 50 in Richtung der Pfeile 2 aufeinander zu gedrückt werden. Hierdurch verformt sich das Außenbauteil 50 im Bereich seines äußeren Mantels 51 und nimmt bezogen auf den Querschnitt eine in etwa elliptische Form ein. Die Nocken 62 des Außenbauteils 50 werden dadurch in Richtung der Pfeile 4 voneinander weggedrückt und gelangen so außer Eingriff bezogen auf die zum Innenbauteil gehörigen Nocken 38. Nun kann das Außenbauteil 50 gegenüber dem Innenbauteil 20 verdreht werden, vorliegend um etwa 150° im Uhrzeigersinn.

Hierdurch stellt sich der Zustand der Fig. 5 bis 8 ein. Wie anhand der Fig. 5 zu erkennen ist, sind nun die Durchbrechungen 34 und 58 am Innenbauteil 20 und am Außenbauteil 50 fluchtend zueinander angeordnet. Flüssigkeit gelangt somit entlang des Flüssigkeitspfads 6 vom Flüssigkeitsspeicher 12 bis in die Kammer oberhalb der Trennwandung 32. Der Spender wird bestimmungsgemäß in einer Überkopflage verwendet, so dass die Flüssigkeit automatisch bis in diese Kammer fließt. Es bedarf nun noch eines Überdrucks, der durch Zusammendrücken des Flüssigkeitsspeichers 12 bewirkt wird. Dieser Überdruck verformt einen die genannte Kammer abschließenden Ventilkörper 72, der mittels eines Befestigungsrands 70 zwischen dem Innenbauteil 20 und dem Außenbauteil 50 eingeklemmt ist, und bewirkt mittelbar durch diese Verformung ein Abheben der Auslassöffnung 16 von der Trennwandung 32 und ein Öffnen dieser Auslassöffnung 16. Flüssigkeit wird ausgetragen.

Wie anhand der Fig. 6 ersichtlich ist, ist auch dieser entsperrte Zustand, der unmittelbar einen Flüssigkeitsaustrag gestattet, durch ein Piktogramm 43 leicht erkennbar. Dies erinnert den erwachsenen Benutzer auch daran, nach Benutzung durch Zurückdrehen des Außenbauteils 50 gegenüber dem Innenbauteil 20 wiederum den gesperrten Zustand des Kindersicherungsmechanismus herzustellen. Diese Herstellung des kindergesicherten Zustands wird durch eine rampenartig ausgestaltete Seite 41 an den Nocken 38 erleichtert.

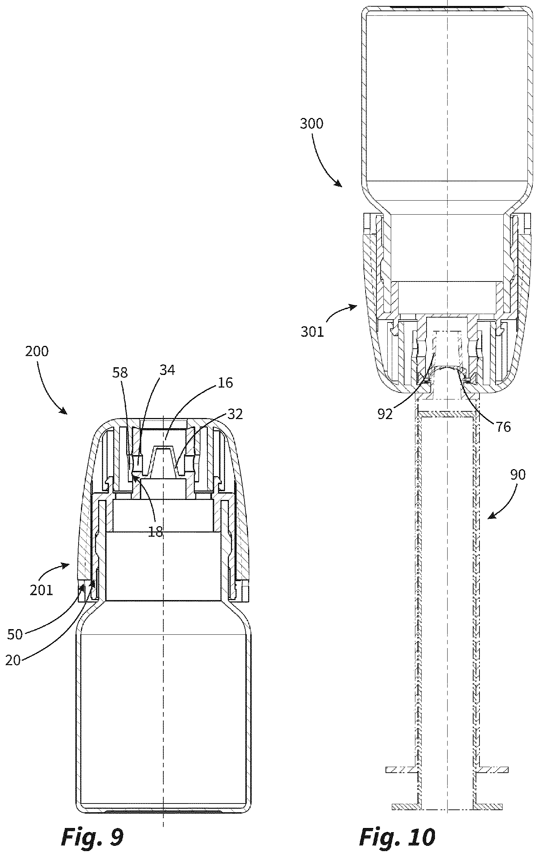

Fig. 9 zeigt eine zweite Ausführungsform eines Spenders 200 mit einem Austragkopf 201, der nicht Teil der Erfindung ist. Im Unterschied zum ersten Flüssigkeitsspender 100 ist hier kein bei Überdruck öffnendes Auslassventil 72 vorgesehen. In der Überkopflage ist somit unmittelbar ein Austrag möglich. Die Kammer oberhalb der Trennwandung 32 bildet somit unmittelbar selbst die Auslassöffnung 16.

Bei der Gestaltung gemäß Fig. 10 ist wiederum ein nahezu baugleicher Flüssigkeitsspender 300 mit einem nahezu baugleichen Austragkopf 301 vorgesehen. Die Besonderheit ist hier, dass statt des bei Überdruck im Spender öffnenden Auslassventils 72 ein Entnahmeventil 76 vorgesehen ist. Dieses Entnahmeventil 76 weist eine Eigenstabilität auf, die bei üblichen Betätigungsdrücken des Flüssigkeitsspeichers 12 keinerlei Austrag von Flüssigkeit gestattet. Stattdessen braucht es eine Entnahmespritze 90 mit einer Spitze 92, die in Fig. 10 angedeutet ist und die durch Einschieben in den Austragkopf 301 ein mechanisches Öffnen des Entnahmeventils 76 ermöglicht.

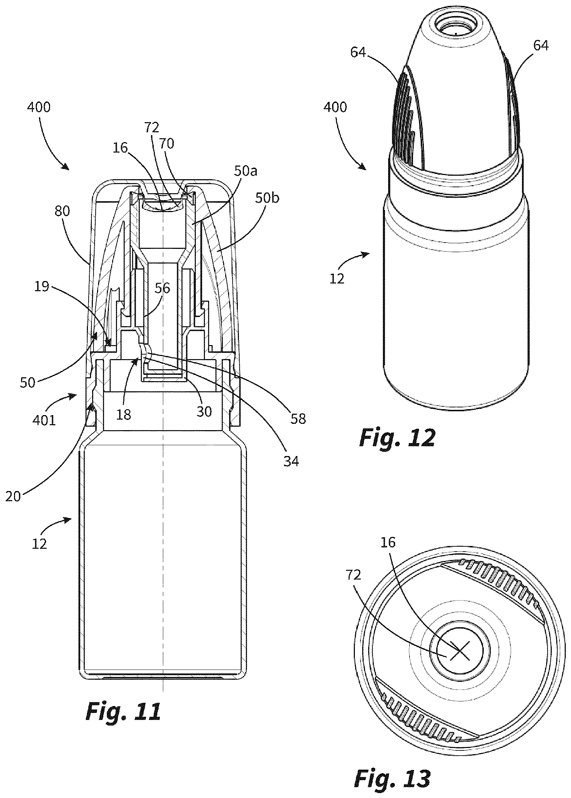

Die Fig. 11 bis 13 zeigen eine weitere Ausgestaltung eines erfindungsgemäßen Flüssigkeitsspenders 400 mit einem erfindungsgemäßen Austragkopf 401. Der Flüssigkeitsspender 400 ist von schlankerer Gestalt. Abweichend von der Gestaltung der Fig. 1 bis 8 ist das Außenbauteil 50 hier aus zwei Teilbauteilen 50a, 50b gebildet, die zueinander drehfest miteinander verbunden sind und zwischen denen der Befestigungsabschnitt 70 des druckabhängig öffnenden Auslassventils 72 eingeklemmt ist. Abweichend von der Gestaltung der Fig. 1 bis 8 entsteht somit keine Reibung am Ventilkörper 72, wenn der Spender nach Lösen der Kindersicherung durch Zusammendrücken der Betätigungsflächen 64 und anschließendem Verdrehen des Außenbauteils 50 gegenüber dem Innenbauteil 20 in den zur Abgabe bereiten Zustand überführt wird. Ein weiterer Unterschied besteht in Hinblick auf das Schaltventil 18 darin, dass bei dieser Gestaltung der Fig. 11 bis 13 die zylindrische Wandung 56 des Außenbauteils mit der daran vorgesehenen Durchbrechung 58 innenliegend der zylindrischen Wandung 30 des Innenbauteils 20 mit Durchbrechungen 34 angeordnet ist.

Im Übrigen ist der Spender der Fig. 11 bis 13 funktional mit dem Spender der Fig. 1 bis 8 vergleichbar. Auch hier ist es eine rein rotative Bewegung zwischen dem Außenbauteil 50 und dem Innenbauteil 20, durch die der Flüssigkeitspfad 6 geöffnet wird, so dass anschließend Flüssigkeit ausgetragen werden kann. Diese rotative Bewegung ist nach Zusammendrücken der Betätigungsflächen 64 möglich, durch die im Bereich 19 eine als Kindersicherung agierende Drehsicherung gelöst wird.

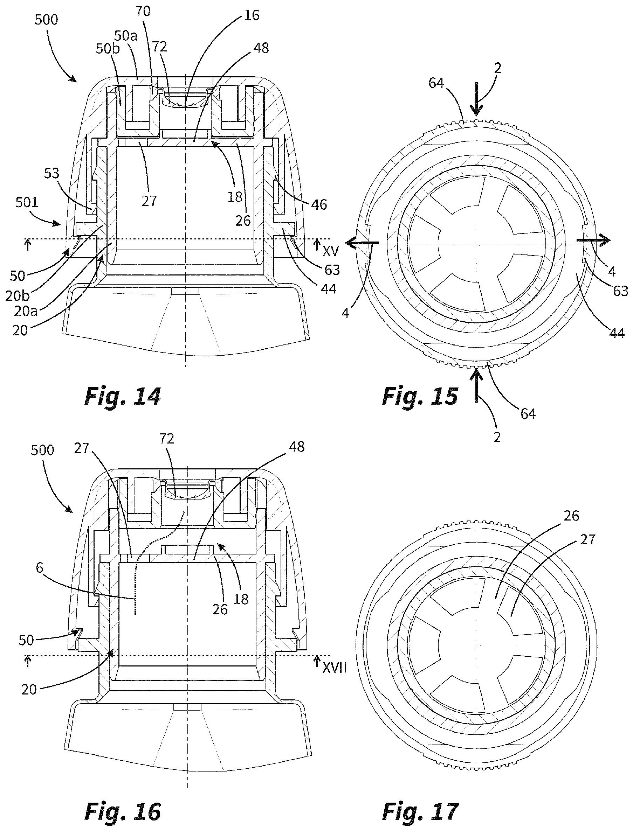

Die Fig. 14 bis 17 zeigen eine weitere Ausführungsform eines erfindungsgemäßen Flüssigkeitsspenders 500 mit einem erfindungsgemäßen Austragkopf 501. Dieser weist einen wesentlichen funktionalen Unterschied zu den vorangegangenen Ausführungsformen auf, da hier zwar auch ein Außenbauteil 50 und ein Innenbauteil 20 vorgesehen sind. Zur Überführung des Flüssigkeitsspenders 500 aus einer ersten Relativlage der Fig. 14 (Schließstellung) in eine zweite Relativlage der Fig. 16 (Öffnungsstellung) bedarf es jedoch statt einer rotativen Bewegung einer translativen Bewegung. Das Innenbauteil 20 wird vorliegend von einem speziell angepassten Flaschenhals 20b und einem darin kraftschlüssig befestigten Einsatz 20a gebildet. Dieser Einsatz 20a verfügt über eine Stirnfläche 26 mit Durchbrechungen 27. Gegenüber diesem Innenbauteil 20 ist das Außenbauteil 50, ebenfalls bestehend aus zwei Teilbauteilen, nämlich einem Außenelement 50a und einem Einsatz 50b, grundsätzlich translativ beweglich. Das Außenbauteil 50 ist dabei auch Träger eines druckabhängig öffnenden Auslassventils 72. Diesem vorgeschaltet ist ein Schaltventil 18, welches über eine Ringkante an der Stirnfläche 26 und einen zylindrischen Kanaleingang am Einsatz 50b gebildet wird. Im Zustand der Fig. 14 ist dieses Schaltventil 18 geschlossen. Ein Öffnen des Schaltventils 18 durch Verschiebung des Außenbauteils 50 gegenüber dem Innenbauteil 20 ist zunächst nicht möglich, da Anschläge 63 an der Innenseite des Außenbauteils 50 unterhalb eines Anschlagrings 44 des Innenbauteils 20 anliegen. Erst durch Kraftbeaufschlagung der Betätigungsflächen 64 in Richtung der in Fig. 15 eingezeichneten Pfeile 2 werden die Anschläge 63 in Richtung der Pfeile 4 ausgelenkt, so dass dann das Außenbauteil 50 angehoben werden kann. Diese Bewegung ist jedoch durch Anschläge 46, 53 begrenzt, so dass das Außenbauteil 50 wiederum unverlierbar am Innenbauteil 20 angebracht ist. Sobald das Außenbauteil 50 angehoben ist, ist wiederum ein Flüssigkeitspfad 6 offen, durch den die Flüssigkeit bis zum druckabhängig öffnenden Auslassventil 72 gelangen kann. Wird das Außenbauteil 50 nach einem Austrag wieder heruntergedrückt, so schnappen die Anschläge 63 automatisch wiederum unterhalb des Anschlagrings 44 ein, so dass wieder ein kindergesicherter Zustand hergestellt wird, der nur durch Kraftbeaufschlagung der Betätigungsflächen 64 erneut überwunden werden kann.

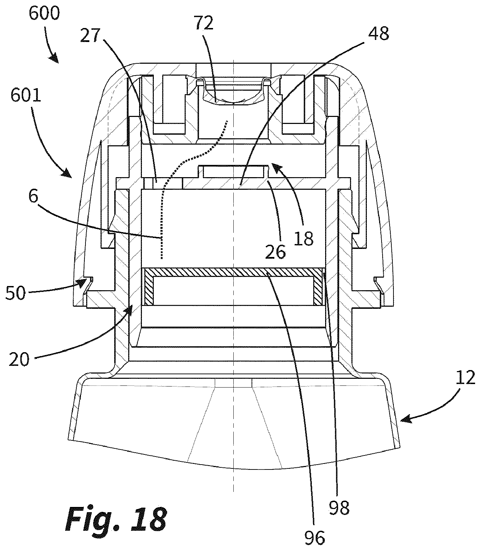

Die Ausführungsform der Fig. 18 zeigt einen Austragkopf 601 eines Spenders 600, welcher im Wesentlichen identisch mit dem Austragkopf 501 der vorangegangenen Ausführungsform ist. Die Besonderheit liegt hier darin, dass eine Blende 96 eingesetzt ist, die den Zufluss von Flüssigkeit aus dem Flüssigkeitsspeicher in Richtung des Auslassventils 72 partiell versperrt. Allerdings sind an der Außenseite der napfförmigen Blende 96 Durchtrittskanäle 98 vorgesehen, durch die Flüssigkeit hindurchtreten kann. Zweck dieser Blende 96 ist es, im Falle eines versehentlich offen gelassenen Spenders dennoch den Austrag von Flüssigkeit zu erschweren. Durch die Blende 96 wird erreicht, dass das Auslassventil 72 nicht allein durch Schütteln des Spenders 600 Flüssigkeit freigibt. Der durch Schütteln erreichte dynamische Druck in der Flüssigkeit erreicht das Auslassventil 72 nicht. Nur die Kraftbeaufschlagung des Flüssigkeitsspeichers 12 in einer Überkopflage reicht aus, um das Auslassventil 72 zu öffnen.

## Patentansprüche

1. Austragkopf (101;301;401;501;601) für einen Flüssigkeitsspender (100;300;400;500;600) mit den folgenden Merkmalen:
a. der Austragkopf (101;301;401;501;601) ist zur Anbringung an einem Flüssigkeitsbehälter (12) vorgesehen und
b. der Austragkopf (101;301;401;501;601) verfügt über eine Austragöffnung (16) und über ein Schaltventil (18), welches in einem geschlossenen Zustand einen Flüssigkeitspfad (6) vom Flüssigkeitsbehälter (12) zur Austragöffnung (16) schließt und in einem geöffnet Zustand diesen Flüssigkeitspfad (6) öffnet, und
c. der Austragkopf (101;301;401;501;601) verfügt über ein ortsfest mit dem Flüssigsbehälter (12) verbundenes Innenbauteil (20), und
d. der Austragkopf (101;301;401;501;601) verfügt über ein beweglich gegenüber dem Innenbauteil (20) vorgesehenes Außenbauteil (50), welches untrennbar mit dem Innenbauteil (20) verbunden ist, wobei das Außenbauteil (50) gegenüber dem Innenbauteil (20) zwischen einer ersten Relativstellung und einer zweiten Relativstellung bewegbar ist, und
e. das Schaltventil (18) kann durch eine Relativbewegung des Innenbauteils (20) gegenüber dem Außenbauteil (50) geöffnet und geschlossen werden, wobei es in der ersten Relativstellung geschlossen ist und in der zweiten Relativstellung geöffnet ist, und
f. das Innenbauteil (20) und das Außenbauteil (50) sind in der ersten Relativstellung durch einen formschlüssig wirkenden Kindersicherungsmechanismus sicherbar, der wiederholt zwischen einer Sicherungsstellung und einer Freigabestellung umschaltbar ist, wobei in der Sicherungsstellung eine Relativverlagerung des Außenbauteils (50) aus der ersten Relativstellung in die zweite Relativstellung unterbunden ist,
**gekennzeichnet durch** eines der folgenden Merkmale:
g. der Austragkopf (101;401;501;601) verfügt über ein druckabhängig bei gegenüber dem Umgebungsdruck höheren Innendruck öffnendes Auslassventil jenseits (72) des Schaltventils (18), oder
h. der Austragkopf (301) verfügt über ein Entnahmeventil (76) jenseits des Schaltventils (18).

2. Austragkopf (101;301;401;501;601) nach Anspruch 1 mit mindestens einem der folgenden Merkmale:
a. das Außenbauteil (50) ist gegenüber dem Innenbauteil (20) zwischen der ersten Relativstellung und der zweiten Relativstellung um eine Drehachse (1) drehbar und/oder
b. das Außenbauteil (50) ist gegenüber dem Innenbauteil (20) zwischen der ersten Relativstellung und der zweiten Relativstellung translativ verlagerbar.

3. Austragkopf (101;401;501;601) nach einem der vorstehenden Ansprüche mit den folgenden Merkmalen:
a. das Auslassventil (72) wird durch ein elastisch auslenkbares Ventilbauteil (72) gebildet, an dem die Austragöffnung (16) vorgesehen ist, welche bei anliegendem Flüssigkeitsdruck durch Verformung des Ventilbauteils (72) geöffnet wird, und
b. das Ventilbauteil (72) verfügt außenseitig über einen umlaufenden Befestigungsabschnitt (70), der am Innenbauteil (20) oder am Außenbauteil (50) befestigt ist oder der zwischen dem Innenbauteil (20) und dem Außenbauteil (50) festgelegt ist.

4. Austragkopf (101;301;401;501;601) nach einem der vorstehenden Ansprüche mit den Merkmalen:
a. der Kindersicherungsmechanismus verfügt über Anschlagflächen (62,40;63,44) am Innenbauteil (20) und am Außenbauteil (50), die ausgehend von der ersten Relativstellung eine rotative und/oder eine translative Bewegung unterbinden und die durch radiale Verlagerung einer der Anschlagflächen (62;63) voneinander entkoppelbar sind.

5. Austragkopf (101;301;401;501;601) nach Anspruch 4 mit dem Merkmal:
a. das Außenbauteil (50) ist in der ersten Relativstellung gegenüber dem Innenbauteil (20) durch manuelle Kraftbeaufschlagung derart verformbar, dass die Anschlagfläche (62;63) am Außenbauteil (50) aus dem Eingriff mit der Anschlagfläche (40;44) am Innenbauteil (20) gelangt.

6. Austragkopf (101;301;401) nach einem der vorstehenden Ansprüche mit den Merkmalen
a. das Außenbauteil (50) und das Innenbauteil (20) sind drehbar und axial unbeweglich aneinander angebracht, und
b. das Schaltventil (18) verfügt über einen radial ausgerichteten Flüssigkeitsdurchlass (34) am Innenbauteil (20) und einen radial ausgerichteten Flüssigkeitsdurchlass (58) am Außenbauteil (50), wobei in der ersten Relativstellung die Flüssigkeitsdurchlässe (34, 58) gegeneinander in Umfangsrichtung versetzt sind, so dass das Schaltventil (18) geschlossen ist, und wobei in der zweiten Relativstellung die Flüssigkeitsdurchlässe (34,58) derart miteinander fluchten, dass das Schaltventil (18) geöffnet ist.

7. Austragkopf (501;601) nach einem der Ansprüche 1 bis 5 mit den Merkmalen:
a. das Außenbauteil (50) und das Innenbauteil (20) sind in einer Relativbewegungsrichtung translativ beweglich aneinander angebracht, und
b. das Schaltventil (18) verfügt über einen Flüssigkeitsdurchlass am Innenbauteil, der durch eine Verschlussfläche am Außenbauteil im Zuge der translativen Relativbewegung des Innenbauteils gegenüber dem Außenbauteil geöffnet oder geschlossen werden kann, oder das Schaltventil (18) verfügt über einen Flüssigkeitsdurchlass am Außenbauteil, der durch eine Verschlussfläche (48) am Innenbauteilbauteil (20) im Zuge der translativen Relativbewegung des Innenbauteils (20) gegenüber dem Außenbauteil (50) geöffnet oder geschlossen werden kann.

8. Austragkopf (301) nach einem der vorstehenden Ansprüche mit den Merkmalen:
a. der Austragkopf (301) verfügt über eine separate Kolbenspritze (90), die derart an das Außenbauteil (50) und das Entnahmeventil (76) angepasst ist, dass sie durch Ansetzen an das Außenbauteil (50) mit einer Spritzenöffnung (92) das Entnahmeventil (76) öffnet.

9. Austragkopf (601) nach einem der vorstehenden Ansprüche mit dem folgenden Merkmal:
a. der Austragkopf (601) verfügt über eine Blende (96) zwischen einer Einlassseite des Austragkopfes und dem Schaltventil (18).

10. Austragkopf (101;301;401;501;601) nach einem der vorstehenden Ansprüche mit mindestens einem der folgenden Merkmale:
a. das Innenbauteil (20) und das Außenbauteil (50) weisen Kennzeichnungsmittel (42, 43, 66) auf, die anzeigen, ob sich das Innenbauteil (20) und das Außenbauteil (50) in der ersten Relativstellung befinden, wobei insbesondere am Außenbauteil eine Aussparung (66) vorgesehen ist, durch die hindurch in der ersten Relativstellung eine Sperrmarkierung (42) am Innenbauteil erkennbar ist, und/oder
b. zur Kraftbeaufschlagung des Außenbauteils (50) zum Zwecke des Lösens des Kindersicherungsmechanismus sind am Außenbauteil (50) in Umfangsrichtung zur Anschlagfläche (62,63) versetzt Betätigungsflächen (64) vorgesehen, und/oder
c. das Außenbauteil (50) weist eine mit der Drehachse (1) fluchtende Durchbrechung auf, innerhalb derer die Austragöffnung (16) vorgesehen ist, und/oder
d. der Austragkopf verfügt über eine Kappe (80) oder einen Messbecher (80), der in einer Stauposition auf das Außenbauteil (50) aufsetzbar ist und dort kraftschlüssig oder formschlüssig gehalten wird, und/oder
e. die Kappe (80) oder der Messbecher (80) weist eine Einbuchtung auf, die durch eine Aussparung des Außengehäuses hindurch ragt und dort eine umlaufende Abdichtung verursacht, und/oder
f. das Innenbauteil (20) und das Außenbauteil (50) sind jeweils einstückig vorgesehen sein und der Austragkopf besteht lediglich aus diesen beiden Bauteilen.

11. Flüssigkeitsspender (100;300;400;500;600) mit den folgenden Merkmalen:
a. der Flüssigkeitsspender (100;300;400;500;600) weist einen Flüssigkeitsbehälter (12) auf und
b. der Flüssigkeitsspender (100;300;400;500;600) weist einen Austragkopf (101;301;401;501;601) auf,
**gekennzeichnet durch** das folgende Merkmal:
c. der Austragkopf (101;301;401;501;601) ist nach einem der vorstehenden Ansprüche ausgebildet.

12. Flüssigkeitsspender (100;300;400;500;600) nach Anspruch 11, mit mindestens einem der Merkmale:
a. der Flüssigkeitsbehälter (12) ist einstückig mit dem Innenbauteil (20) verbunden oder der Flüssigkeitsbehälter (12) und das Innenbauteil (20) weisen Kopplungsmittel (22,24) auf, mittels derer das Innenbauteil (20) auf dem Flüssigkeitsbehälter (12) befestigbar ist, und/oder
b. der Flüssigkeitsbehälter (12) ist befüllt mit einer pharmazeutischen Flüssigkeit, insbesondere mit einem Hustensaft.

## Claims

1. Discharge head (101; 301; 401; 501; 601) for a fluid dispenser (100; 300; 400; 500; 600) having the following features:
a. the discharge head (101; 301; 401; 501; 601) is provided to be fitted to a fluid container (12) and
b. the discharge head (101; 301; 401; 501; 601) has a discharge opening (16) and a switching valve (18) which, in a closed state, closes a fluid path (6) from the fluid container (12) to the discharge opening (16) and, in an open state, opens that fluid path (6), and
c. the discharge head (101; 301; 401; 501; 601) has an inner component (20) which is fixedly connected to the fluid store (12) and
d. the discharge head (101; 301; 401; 501; 601) has an outer component (50) which is movably provided with respect to the inner component (20) and which is connected to the inner component (20) in a non-separable manner, wherein the outer component (50) can be moved relative to the inner component (20) between a first relative position and a second relative position, and
e. the switching valve (18) can be opened and closed by a relative movement of the inner component (20) with respect to the outer component (50), wherein it is closed in the first relative position and is open in the second relative position, and
f. the inner component (20) and the outer component (50) can be locked in the first relative position by a child-resistance mechanism which acts in a positive-locking manner and which can be switched over repeatedly between a locking position and a release position, wherein a relative displacement of the outer component (50) from the first relative position into the second relative position is prevented in the locking position,
**characterised by** one of the following features:
g. the discharge head (101; 401; 501; 601) has an outlet valve which opens in a pressure-dependent manner in the case of inner pressure which is higher than the ambient pressure at the other side (72) of the switching valve (18), or
h. the discharge head (301) has an extraction valve (76) at the other side of the switching valve (18).

2. Discharge head (101; 301; 401; 501; 601) according to either of the preceding claims, having at least one of the following features:
a. the outer component (50) is rotatable relative to the inner component (20) between the first relative position and the second relative position about a rotation axis (1) and/or
b. the outer component (50) is displaceable relative to the inner component (20) in a translational manner between the first relative position and the second relative position.

3. Discharge head (101; 401; 501; 601) according to either of the preceding claims, having the following features:
a. the outlet valve (72) is formed by a resiliently redirectable valve component (72), in which the discharge opening (16) is provided and is opened by the valve component (72) being deformed in the case of fluid pressure being applied, and
b. the valve component (72) has at the outer side a peripheral fixing portion (70) which is fixed to the inner component (20) or the outer component (50), or which is fixed between the inner component (20) and the outer component (50).

4. Discharge head (101; 301; 401; 501; 601) according to any one of the preceding claims, having the features.
a. the child-resistance mechanism has on the inner component (20) and the outer component (50) stop faces (62, 40; 63, 44) which prevent a rotational and/or a translational movement starting from the first relative position and which can be uncoupled from each other by radial displacement of one of the stop faces (62; 63).

5. Discharge head (101; 301; 401; 501; 601) according to Claim 4, having the feature:
a. the outer component (50) is deformable in the first relative position with respect to the inner component (20) by manual application of force so that the stop face (62; 63) on the outer component (50) moves out of engagement with the stop face (40; 44) on the inner component (20).

6. Discharge head (101; 301; 401) according to any one of the preceding claims, having the features:
a. the outer component (50) and the inner component (20) are fitted to each other in a rotationally and axially non-movable manner, and
b. the switching valve (18) has a radially orientated fluid outlet (34) in the inner component (20) and a radially orientated fluid outlet (58) in the outer component (50), wherein in the first relative position the fluid outlets (34; 58) are offset relative to each other in a peripheral direction so that the switching valve (18) is closed, and wherein in the second relative position the fluid outlets (34, 58) are aligned with each other so that the switching valve (18) is open.

7. Discharge head (501; 601) according to any one of Claims 1 to 5, having the features:
a. the outer component (50) and the inner component (20) are fitted to each other in a translationally movable manner in a relative movement direction, and
b. the switching valve (18) has in the inner component a fluid outlet which can be opened or closed with respect to the outer component by a closure face on the outer component following the relative translational movement of the inner component, or the switching valve (18) has in the outer component a fluid outlet which can be opened or closed with respect to the outer component (50) by a closure face (48) on the inner component (20) following the relative translational movement of the inner component (20).

8. Discharge head (301) according to any one of the preceding claims, having the features:
a. the discharge head (301) has a separate piston type syringe (90) which is adapted to the outer component (50) and the extraction valve (76) so that it opens the extraction valve (76) by being placed against the outer component (50) with a syringe opening (92).

9. Discharge head (601) according to any one of the preceding claims, having the following feature:
a. the discharge head (601) has a diaphragm (96) between an inlet side of the discharge head and the switching valve (18).

10. Discharge head (101; 301; 401; 501; 601) according to any one of the preceding claims, having at least one of the following features:
a. the inner component (20) and the outer component (50) have designation means (42, 43, 66) which indicate whether the inner component (20) and the outer component (50) are in the first relative position, wherein there is provided in particular in the outer component a recess (66), through which a locking marking (42) on the inner component can be seen in the first relative position, and/or
b. in order to apply force to the outer component (50) for the purpose of releasing the child-resistance mechanism, actuation faces (64) are provided on the outer component (50) so as to be offset in a peripheral direction relative to the stop face (62, 63), and/or
c. the outer component (50) has an opening which is aligned with the rotation axis (1) and inside which the discharge opening (16) is provided, and/or
d. the discharge head has a cap (80) or a measuring cup (80) which can be positioned on the outer component (50) in a blocking position and which is retained at that location in a non-positive or positive-locking manner, and/or
e. the cap (80) or measuring cup (80) has a recess, which extends through a recess of the outer housing and causes a peripheral seal at that location, and/or
f. the inner component (20) and the outer component (50) are provided integrally and the discharge head comprises only those two components.

11. Fluid dispenser (100; 300; 400; 500; 600) having the following features:
a. the fluid dispenser (100; 300; 400; 500; 600) has a fluid container (12) and
b. the fluid dispenser (100; 300; 400; 500; 600) has a discharge head (101; 301; 401; 501; 601),
**characterised by** the following feature:
c. the discharge head (101; 301; 401; 501; 601) is constructed according to any one of the preceding claims.

12. Fluid dispenser (100; 300; 400; 500; 600) according to Claim 11, having at least one of the features:
a. the fluid container (12) is connected to the inner component (20) integrally or the fluid container (12) and the inner component (20) have connection means (22, 24), via which the inner component (20) can be fixed on the fluid container (12), and/or
b. the fluid container (12) is filled with a pharmaceutical fluid, in particular with a cough syrup.

## Revendications

1. Tête distributrice (101 ; 301 ; 401 ; 501 ; 601), destinée à un distributeur de liquide (100 ; 300 ; 400 ; 500 ; 600), présentant les caractéristiques suivantes :
a. la tête distributrice (101 ; 301 ; 401 ; 501 ; 601) est prévue pour être montée sur un récipient de liquide (12) et
b. la tête distributrice (101 ; 301 ; 401 ; 501 ; 601) dispose d'un orifice de distribution (16) et d'une soupape de commutation (18), qui dans une position fermée, ferme un trajet de liquide (6) du récipient de liquide (12) vers l'orifice de distribution (16) et dans une position ouverte, ouvre ledit trajet de liquide (6) et
c. la tête distributrice (101 ; 301 ; 401 ; 501 ; 601) dispose d'un composant interne (20), relié de manière stationnaire avec le récipient de liquide (12),
d. la tête distributrice (101 ; 301 ; 401 ; 501 ; 601) dispose d'un composant externe (50), prévu en étant mobile par rapport au composant interne (20), lequel est relié de manière indissociable avec le composant interne (20), le composant externe (50) étant mobile par rapport au composant interne (20), entre une première position relative et une deuxième position relative et
e. par un déplacement relatif du composant interne (20) par rapport au composant externe (50), la soupape de commutation (18) peut être ouverte et fermée, étant fermée dans la première position relative et ouverte dans la deuxième position relative,
f. dans la première position relative, le composant interne (20) et le composant externe (50) peuvent être sécurisés par un mécanisme de sécurité enfant, agissant par complémentarité de forme, qui est commutable de manière répétitive entre une position de sécurité et une position de libération, dans la position de sécurité, un déplacement relatif du composant externe (50) à partir de la première position relative dans la deuxième position relative étant empêchée,
**caractérisée par** l'une des caractéristiques suivantes :
g. la tête distributrice (101 ; 401 ; 501 ; 601) dispose d'une soupape de sortie (72) en regard de la soupape de commutation (18), s'ouvrant en fonction de la pression lorsque la pression interne est plus élevée que la pression environnante, ou
h. la tête distributrice (301) dispose d'une soupape de prélèvement (76), en regard de la soupape de commutation (18).

2. Tête distributrice (101 ; 301 ; 401 ; 501 ; 601) selon la revendication 1, présentant au moins l'une des caractéristiques suivantes :
a. le composant externe (50) est rotatif autour d'un axe de rotation (1) par rapport au composant interne (20), entre la première position relative et la deuxième position relative et/ou
b. le composant externe (50) est déplaçable en translation par rapport au composant interne (20), entre la première position relative et la deuxième position relative.

3. Tête distributrice (101 ; 401 ; 501 ; 601) selon l'une quelconque des revendications précédentes, présentant les caractéristiques suivantes :
a. la soupape de sortie (72) est formée par un composant de soupape (72) apte à la déflexion élastique, sur lequel est prévu l'orifice de distribution (16), lequel s'ouvre lorsque la pression du liquide est appliquée, par déformation du composant de soupape (72) et
b. le composant de soupape (72) dispose sur sa face extérieure d'un segment de fixation (70) périphérique, qui est fixé sur le composant interne (20) ou sur le composant externe (50) ou qui est immobilisé entre le composant interne (20) et le composant externe (50).

4. Tête distributrice (101 ; 301 ; 401 ; 501 ; 601) selon l'une quelconque des revendications précédentes, présentant les caractéristiques :
a. le mécanisme de sécurité enfant dispose de surfaces de butée (62, 40 ; 63, 44) sur le composant interne (20) et sur le composant externe (50), qui en partant de la première position relative, empêchent un déplacement en rotation et/ou en translation et qui peuvent être désengagées l'une de l'autre par déplacement radial de l'une des surfaces de butée (62 ; 63).

5. Tête distributrice (101 ; 301 ; 401 ; 501 ; 601) selon la revendication 4, présentant la caractéristique :
a. dans la première position relative, le composant externe (50) est déformable par rapport au composant interne (20) par application manuelle d'une force, de telle sorte que la surface de butée (62 ; 63) sur le composant externe (50) se désengage de la surface de butée (40 ; 44) sur le composant interne (20).

6. Tête distributrice (101 ; 301 ; 401) selon l'une quelconque des revendications précédentes, présentant les caractéristiques :
a. le composant externe (50) et le composant interne (20) sont montés l'un sur l'autre en étant rotatifs et immobiles en direction axiale et
b. la soupape de commutation (18) dispose d'un passage de liquide (34) orienté en direction radiale sur le composant interne (20) et d'un passage de liquide (58) orienté en direction radiale sur le composant externe (50), dans la première position relative, les passages de liquide (34, 58) étant décalés l'une par rapport à l'autre dans la direction périphérique, de telle sorte que la soupape de commutation (18) soit fermée et dans la deuxième position relative, les passages de liquide (34, 58) étant alignés l'un sur l'autre, de telle sorte que la soupape de commutation (18) soit ouverte.

7. Tête distributrice (501 ; 601) selon l'une quelconque des revendications 1 à 5, présentant les caractéristiques :
a. le composant externe (50) et le composant interne (20) sont reliés l'un à l'autre en étant déplaçables en translation dans une direction de déplacement relatif, et
b. la soupape de commutation (18) dispose d'un passage de liquide sur le composant interne, qui par une surface de fermeture sur le composant externe, au cours du déplacement relatif en translation du composant interne par rapport au composant externe peut être ouvert ou fermé ou la soupape de commutation (18) dispose d'un passage de liquide sur le composant externe, qui par une surface de fermeture (48) sur le composant interne (20), au cours du déplacement relatif en translation du composant interne (20) par rapport au composant externe (50) peut être ouvert ou fermé.

8. Tête distributrice (301) selon l'une quelconque des revendications précédentes, présentant les caractéristiques :
a. la tête distributrice (301) dispose d'une seringue à piston (90) séparée, qui est adaptée au composant externe (50) et à la soupape de prélèvement (76), de telle sorte que par application sur le composant externe (50), elle ouvre la soupape de prélèvement (76) avec un orifice de seringue (92).

9. Tête distributrice (601) selon l'une quelconque des revendications précédentes, présentant la caractéristique suivante :
a. la tête distributrice (601) dispose d'un cache (96) entre le côté entrée de la tête distributrice et la soupape de commutation (18) .

10. Tête distributrice (101 ; 301 ; 401 ; 501 ; 601) selon l'une quelconque des revendications précédentes, présentant au moins l'une des caractéristiques suivantes :
a. le composant interne (20) et le composant externe (50) comportent des moyens d'identification (42, 43, 66) qui indiquent si le composant interne (20) et le composant externe (50) se trouvent dans la première position relative, notamment sur le composant externe étant prévu un évidement (66) à travers lequel, dans la première position relative un marquage de blocage (42) est identifiable sur le composant interne et/ou
b. pour exercer une force sur le composant externe (50) afin de désactiver le mécanisme de sécurité enfant, des surfaces de manoeuvre (64) sont prévues sur le composant externe (50) en décalage de la surface de butée (62, 63) dans la direction périphérique, et/ou
c. le composant externe (50) comporte un ajour, aligné sur l'axe de rotation (1) à l'intérieur duquel est prévu l'orifice de distribution (16) et/ou
d. la tête distributrice dispose d'un capuchon (80) ou d'un gobelet gradué (80), qui peut s'emboîter sur le composant externe (50) dans une position de rangement et y est maintenu par complémentarité de force ou par complémentarité de forme et/ou
e. le capuchon (80) ou le gobelet gradué (80) comporte une échancrure qui saillit à travers un évidement du boîtier externe et y assure une étanchéité périphérique et/ou
f. le composant interne (20) et le composant externe (50) sont prévus chacun en monobloc et la tête distributrice est uniquement constituée de ces deux composants.

11. Distributeur de liquide (100 ; 300 ; 400 ; 500 ; 600), présentant les caractéristiques suivantes :
a. le distributeur de liquide (100 ; 300 ; 400 ; 500 ; 600) comporte un récipient de liquide (12) et
b. le distributeur de liquide (100 ; 300 ; 400 ; 500 ; 600) comporte une tête distributrice (101 ; 301 ; 401 ; 501 ; 601),
**caractérisé par** la caractéristique suivante :
c. la tête distributrice (101 ; 301 ; 401 ; 501 ; 601) est réalisée selon l'une quelconque des revendications précédentes.

12. Distributeur de liquide (100 ; 300 ; 400 ; 500 ; 600) selon la revendication 11, présentant au moins l'une des caractéristiques :
a. le récipient de liquide (12) est relié en monobloc avec le composant interne (20) ou le récipient de liquide (12) et le composant interne (20) comportent des moyens d'accouplement (22, 24) à l'aide desquels le composant interne (20) peut se fixer sur le récipient de liquide (12) et/ou
b. le récipient de liquide (12) est rempli d'un liquide pharmaceutique, notamment d'un sirop antitussif.
